# EUROPÄISCHE PATENTSCHRIFT

(11) **EP 1 511 590 B1**
(45) Veröffentlichungstag und Bekanntmachung des Hinweises auf die Patenterteilung: **22.09.2010**
(21) Anmeldenummer: 03735441.2
(22) Anmeldetag: 23.05.2003
(51) Int. Cl.: B23C 5/10

(54) **FRÄSER MIT WIPER-RADIUS**
MILLING CUTTER HAVING A WIPER RADIUS
FRAISE AVEC RAYON DE SURFAÇAGE

(30) Priorität: 10.06.2002 DE 10225481
(43) Veröffentlichungstag der Anmeldung: 09.03.2005
(73) Patentinhaber: Sandvik Intellectual Property AB, 811 81 Sandviken (SE)
(72) Erfinder: SVENSSON, Jonas, 77564 Offenburg (DE)
(74) Vertreter: Weber, Roland
(86) Internationale Anmeldenummer: PCT/EP2003/005389
(87) Internationale Veröffentlichungsnummer: WO 2003/103880

(56) Entgegenhaltungen:
- US-A- 4 300 862
- US-A- 5 087 159
- US-A- 5 513 931
- PATENT ABSTRACTS OF JAPAN vol. 018, no. 418 (M-1650), 5. August 1994 (1994-08-05) & JP 06 126521 A (WATARU AOKI), 10. Mai 1994 (1994-05-10)
- PATENT ABSTRACTS OF JAPAN vol. 1999, no. 11, 30. September 1999 (1999-09-30) & JP 11 156620 A (HITACHI TOOL ENG LTD), 15. Juni 1999 (1999-06-15)
- PATENT ABSTRACTS OF JAPAN vol. 1998, no. 04, 31. März 1998 (1998-03-31) & JP 09 309020 A (HITACHI TOOL ENG LTD), 2. Dezember 1997 (1997-12-02)

## Beschreibung

Die vorliegende Erfindung betrifft einen Schaftfräser gemäß dem Oberbegriff des Anspruchs 1. Ein solcher schaftfräser ist aus der US-A-5 087 159 bekannt.

Fräsen ist ein spanabnehmendes Bearbeitungsverfahren mit rotierendem Werkzeug. Die Schneiden erzeugen dabei durch ihre Drehung um die Mittelachse des Werkzeugs die Schnittbewegung. Die Vorschubbewegungen können in verschiedenen Richtungen erfolgen. Sie werden vom Werkzeug oder vom Werkstück oder sogar von beiden ausgeführt. Im Gegensatz zum Drehen und Bohren sind die Schneiden nicht ständig im Eingriff. Nach einem Schnitt am Werkstück werden sie im Freien zum Anschnittpunkt zurückgeführt. Dadurch können sie abkühlen und die Späne aus den Spankammern abgeben.

Grundsätzlich wird zwischen drei unterschiedlichen Fräsverfahren unterschieden: das Umfangsfräsen, das Stirnfräsen und das Stirn-Umfangsfräsen. Umfangsfräsen, auch Walzfräsen genannt, ist ein Fräsverfahren, bei dem die am Umfang des Werkzeugs liegenden Hauptschneiden die gewünschte Werkstückoberfläche erzeugen; die Fräserachse verläuft daher parallel zur Arbeitsfläche und senkrecht zur Vorschubrichtung des Fräsers. Beim Stirnfräsen ist die gewünschte, zu erzeugende Werkstückoberfläche diejenige, auf welcher die Fräserachse senkrecht steht und in diesem Fall ist die Vorschubrichtung des Fräsers parallel zu der erzeugten Werkstückoberfläche. Die wesentliche Zerspanung erfolgt aber auch dabei in erster Linie mit den an der Umfangsfläche angeordneten Hauptschneiden. Die an der Stirnseite des Werkzeugs liegenden Nebenschneiden glätten die gefräste Fläche und erzeugen somit die Werkstückoberfläche. Beim Stirn-Umfangsfräsen schließlich erzeugen sowohl Haupt- als auch Nebenschneiden die gewünschten Werkstückoberflächen.

Mit Hilfe des Stirnfräsens können relativ hochwertige Oberflächen erzeugt werden. Dabei sind die Nebenschneiden allein für die entstehende Oberfläche verantwortlich. Sie bewegen sich in einer Ebene und nicht auf einer gekrümmten Arbeitsfläche wie die Hauptschneiden, die beim Umfangsfräsen die Werkstückoberfläche erzeugen. Mit geeigneten Stirnfräsern ist die feine Endbearbeitung ebener Flächen möglich.

Nach allgemeiner Auffassung wird die Qualität der durch Fräsen hergestellten besonders ebenen und glatten Flächen im wesentlichen bestimmt durch die Schneideneckenform und durch Ausrichtung der Nebenschneiden.

Um jedoch mit Hilfe der herkömmlichen Stirnfräser eine hohe Oberflächenqualität zu erreichen, muß die Vorschubgeschwindigkeit sehr niedrig und die Bearbeitungstiefe bzw. Spandicke sehr gering gewählt werden, was wiederum zu höheren Bearbeitungszeiten und damit zu höheren Kosten führt.

Die US-A-5087159 beschreibt einen Stirnfräser mit einem Schaftteil und einem Schneidteil mit einer an der Umfangsfläche des Schneidteils angeordneten Hauptschneidkante und einer an der Stirnfläche des Schneidteils angeordneten Nebenschneidkante, wobei die Nebenschneidkante in der Projektion auf einer die Fräseachse enthaltene Ebene, einen konvex gekrümmten Abschnitt mit einem Krümmungsradius R1 > D₂/2 und einen Krümmungsmittelpunkt M im Abstand < D₂/2 von der Fräserachse hat.

Es ist daher Aufgabe der vorliegenden Erfindung, einen Schaftfräser zur Verfügung zu stellen, mit welchem das Stirnfräsen mit hoher Vorschubgeschwindigkeit und hoher Zerspanungsleistung bei gleichzeitig hoher Qualität der bearbeiteten Oberfläche erfolgen kann.

Erfindungsgemäß wird diese Aufgabe gelöst durch einen Schaftfräser mit einem Schaftteil, das für die Befestigung des Schaftfräsers an einer Fräsmaschine vorgesehen ist, und einem Schneidteil, das dafür vorgesehen ist, mit dem Werkstück in Eingriff zu treten, wobei die einhüllende Fläche des Schneidteils im wesentlichen zylindrisch ist, mit mindestens einer an der Umfangsfläche des Schneidteils angeordneten Hauptschneidkante und mindestens einer an der Stirnfläche des Schneidteils angeordneten Nebenschneidkante, und mit einem Stirndurchmesser D_{c}, wobei die Nebenschneidkante in der Projektion auf eine die Fräserachse enthaltende Ebene einen konvex gekrümmten Abschnitt hat mit einem Krümmungsradius r_{wiper} > D_{c}/2 und einem Krümmungsmittelpunkt M im Abstand d_{Offset} < D_{c}/2 von der Fräserachse, dadurch gekennzeichnet dass der Mittelpunkt (M) des gedachten Kreises, auf dem der mit dem Radius r_{wiper} gekrümmte Abschnitt der Nebenschneidkante liegt, außerhalb der Rotationsachse des Fräsers liegt (d_{Offset} > 0).

Es hat sich nämlich überraschend gezeigt, daß die Qualität der Endbearbeitung ebener Flächen durch die erfindungsgemäße Ausbildung der Nebenschneidkante mit einem nur wenig gekrümmten Abschnitt bei gleichzeitig erheblich größerer Vorschubgeschwindigkeit deutlich verbessert werden kann. Dabei trägt auch die Nebenschneidkante einen erheblichen Teil zur Zerspanungsleistung bei. Vorzugsweise weist der erfindungsgemäß gekrümmte Bereich den Punkt auf, der in axialer Richtung an der dem Schaftteil abgewandten Seiten am weitesten vorspringt und daher, wenn man das Werkzeug in einer axialen Bewegung zu einem Werkstück führte, als erstes mit dem Werkstück in Kontakt tritt, mit anderen Worten, der Krümmungsmittelpunkt hat einen Abstand d_{offset} zur Fräserachse, welcher kleiner als der Radius D_{c}/2 des Stirnfräsers ist.

Dadurch ist sichergestellt, daß die Endbearbeitung der Werkstückoberfläche durch den efindungsgemäß gekrümmten Abschnitt erfolgt und nicht etwa durch die Schneidecke.

Beim Stirnfräsen hinterlassen im allgemeinen die Schneidenecken und die Nebenschneiden auf der Werkstückoberfläche bogenförmige Bearbeitungsspuren. Die Bögen sind Teile der Zykloide, die durch Überlagerung der Werkzeugdrehung und des meist geradlinigen Vorschubes entstehen. Diese Bögen haben in etwa den Abstand des Schneidenvorschubes voneinander. Durch die erfindungsgemäße Ausbildung des Fräsers können die bogenförmigen Bearbeitungsspuren vermieden werden. Der Abschnitt der Nebenschneidkante, der entsprechend des Radius r_{wiper} gekrümmt ist, übernimmt eine Art "Wischer"-Funktion bzw. Schlichtfunktion, so daß möglicherweise durch die Schneidenecke entstandene Bearbeitungsspuren wirksam entfernt werden. Durch den erfindungsgemäßen Stirnfräser kann die Vorschubgeschwindigkeit und damit die Bearbeitungsgeschwindigkeit bei extrem hoher Oberflächenqualität deutlich erhöht werden. Mit Vorteil ist der erfindungsgemäß gekrümmte Abschnitt im wesentlichen an der der Hauptschneidkante zugewandten Seite der Nebenschneidkante angeordnet.

Es hat sich gezeigt, daß der Krümmungsradius mit Vorteil sehr groß, z.B. größer als 0,66 D_{c} gewählt werden sollte. Allerdings verbessern Krümmungsradien von > 800 mm die Qualität der Oberfläche praktisch nicht mehr, sondern führen lediglich aufgrund einer erhöhten Wärmeentwicklung entlang des größeren Bereichs, an dem die Nebenschneidkanten das Werkstück berühren, zu einer unerwünschten Abnutzung des Werkzeugs, daß 800 mm eine sinnvolle maximale Obergrenze für den Krümmungsradius darstellen, der vorzugsweise auch kleiner als 500 mm ist.

Es versteht sich, daß der gekrümmte Abschnitt auch aus mehreren geraden, zueinander gewinkelten Teilstücken bestehen kann.

Die Maßnahme, dass der Abstand d_{Offset} größer als Null ist, führt dazu, daß die Nebenschneidkante an Ihrer der Hauptschneidkante zugewandten Seite möglichst senkrecht zu der Rotationsachse des Fräserschafts verläuft. Der Abstand d_{Offset} zwischen dem Mittelpunkt M und der Rotationsachse ist bei einer bevorzugten Ausführungsform größer oder gleich D_{c}/6, vorzugsweise größer als D_{c}/4, besonders bevorzugt größer als D_{c}/3. Durch diese Maßnahme wird die Ausbildung der Nebenschneidkante im Hinblick auf eine besonders gute Oberflächenbearbeitung weiterentwickelt. Versuche haben gezeigt, daß prinzipiell der Abstand des Mittelpunktes M von der Rotationsachse möglichst groß sein solite. Allerdings wird der erfindungsgemäße Effekt bei einem Abstand größer als D_{c}/2 nicht mehr verstärkt.

In einer weiteren besonders bevorzugten Ausführungsform weist eine Schneidecke, die durch den Übergang von der Hauptschneidkante zu der Nebenschneidkante gebildet wird, einen Eckenradius R_{c} auf, der kleiner als D_{c}/2 ist Durch diese Ausbildung der Schneidecke kann die Langlebigkeit des Werkzeugs deutlich verbessert werden. Auch hier kann die Krümmung mit Hilfe von mehreren geraden, zueinander gewinkelten Teilstücken angenähert werden.

Alternativ dazu kann in einer anderen bevorzugten Ausführungsform die Schneidecke, die durch den Übergang von der Hauptschneidkante zu der Nebenschneidkante gebildet wird, eine Abfasung aufweisen, die vorzugsweise gegenüber der Ebene, die senkrecht zur Rotationsachse verläuft, um einen Winkel zwischen 30° und 60° und besonders bevorzugt zwischen 40° und 50° geneigt ist.

Auch durch diese Maßnahme kann die Schneidecke des Schaftfräsers geschont werden, so daß insgesamt die Standzeit des Stirnfräsers vergrößert wird.

Bei einer besonders bevorzugten Ausführungsform ist die Nebenschneidkante unter einem Freiwinkel von mindestens 1° angeordnet. Genau genommen wird hier jedoch der Bereich der Nebenschneidkante angesprochen, der sich an den mit dem Radius r_{wiper} gekrümmten Radius in Richtung der Fräsermitte anschließt. Diese Maßnahme führt dazu, daß der Stirnfräser bei einer Draufsicht auf die Stirnfläche kegelförmig nach innen geneigt ist.

Versuche haben gezeigt, daß aufgrund der mit dem Radius r_{Wiper} gekrümmten Nebenschneidkante mit Vorteil der Freiwinkel auch deutlich größer als 1° gewählt werden kann, wie z.B. zwischen 1,5° und 10°, vorzugsweise zwischen 2,5° und 10°. Durch diese Maßnahme wird der Kontaktbereich zwischen Werkstück und Nebenschneidkante weiter vermindert, so daß der Fräser während des Betriebes weniger erwärmt wird und somit die Lebensdauer erhöht werden kann.

Der erfindungsgemäße Schaftfräser ist vorzugsweise ein Stirnfräser und dessen Schneidteil besteht mit Vorteil zumindest teilweise aus Hartmetall, Cermet, PCD (polykristallinem Diamant), CBN (kubisches Bornitrid) oder SIN (Silizium-Nitrid basierte Keramik).

Weitere Vorteile, Merkmale und Anwendungsmöglichkeiten der vorliegenden Erfindung werden deutlich anhand der folgenden Beschreibung einer bevorzugten Ausführungsform sowie der dazugehörigen Figuren.

Es zeigen:
- Figuren 1a-1c: eine Abbildung eines Stirnfräser des Standes der Technik und
- Figuren 2a-2c: eine Ausführungsform eines Stirnfräsers mit entsprechend erfindungsgemäß ausgebildeter Nebenschneidkante.

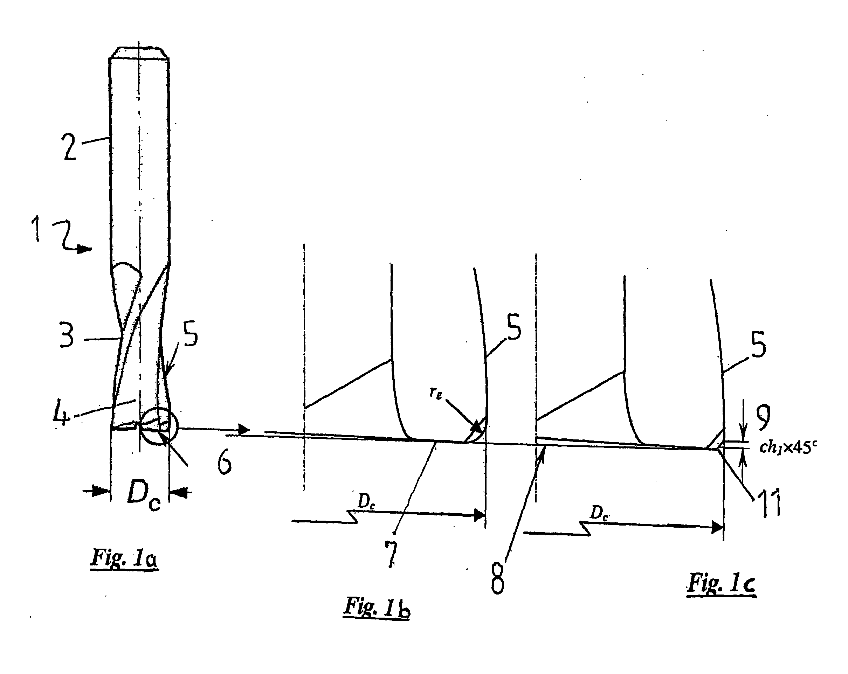

In Figur 1a ist eine seitliche Ansicht eines Stirnschaftfräsers 1 des Standes der Technik gezeigt. Er besteht aus einem Schaftteil 2 und einem Schneidteil 3. Das Schaftteil 2 ist hier als Zylinderschaft ausgebildet. Es versteht sich jedoch, daß auch alle anderen Schaftformen verwendet werden können, wie z.B. eine Morsekegelschaft, Steilkegelschaft, Weldenschaft oder ein Whistle-Notch-Schaft.

Das Schneidteil 3 weist hier zwei Hauptschneidkanten 5 auf, die durch zwei Spiralnuten 4 voneinander getrennt sind. Die Hauptschneidkanten sind an der Umfangsfläche des zylindrischen Schneidteils 3 angebracht. Die Stirnflächen des Schneidteils weisen die Nebenschneidkanten 7 auf. Der Fräser hat einen Stirndurchmesser D_{c}, wie in Figur 1a dargestellt.

In den Figuren 1b und 1c sind vergrößerte Detailausschnitte der Schneidenecke aus Figur 1a dargestellt, wobei in den Figuren 1b und 1c jeweils unterschiedliche Ausführungsformen gezeigt sind.

Die Schneidecke 6 weist in der Ausführungsform von Figur 1b einen Krümmungsradius R_{∈} auf. Die in Figur 1c gezeigte Ausführungsform unterscheidet sich von der in Figur 1b gezeigten Ausführungsform im wesentlichen dadurch, daß die Schneidenecke 6 nicht mit einem Krümmungsradius R_{∈} versehen ist, sondern eine Fase 9 aufweist. Beide Maßnahmen dienen im wesentlichen dazu, die Ecke zu schonen und damit die Lebensdauer bzw. Standzeit des Fräsers 1 zu erhöhen.

Deutlich zu erkennen ist in den Figuren 1b und 1c, daß die Nebenschneidkante 7 einen Freiwinkel 8 bildet. Bei der in Figur 1b und 1c gezeigten Ansicht bildet somit immer ein Teil der Ecke den tiefsten Teil des Fräsers, der am weitesten in das Werkstück eintaucht.

Während der Bearbeitung führt dies dazu, daß die Schneidenecken bzw. die sich anschließenden Nebenschneiden auf der Werkstückoberfläche bogenförmige Bearbeitungsspuren hinterlassen. Diese werden um so deutlicher, je größer die Vorschubgeschwindigkeit, die bei den Stirnfräsern senkrecht zur Rotationsachse des Fräsers verläuft, gewählt wird.

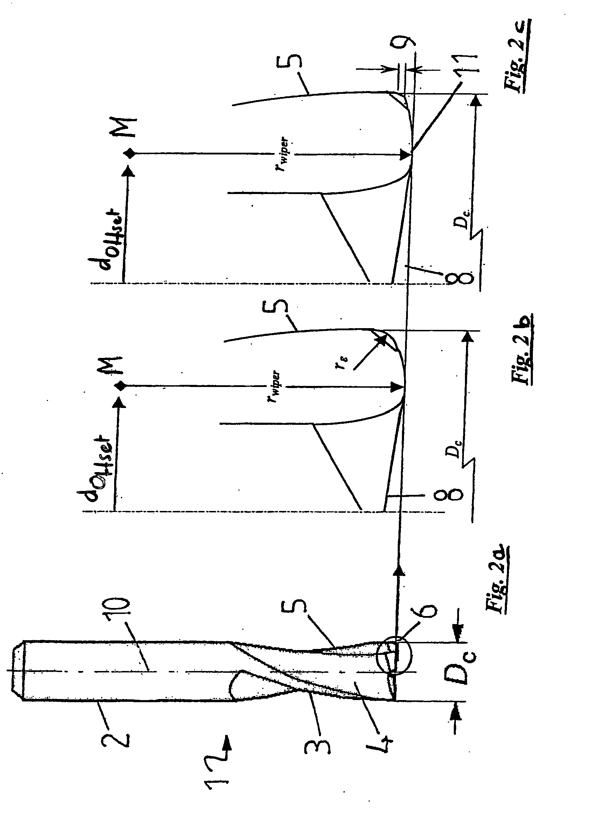

In den Figuren 2a bis 2c sind Ansichten von Ausführungsformen erfindungsgemäßer Fräser gezeigt.

Die Figur 2a entspricht im wesentlichen der Figur 1a. Auch hier besteht der Fräser 1 aus einem Schaftteil 2 und einem zylindrischen Schneidteil 3, das mehrere, im gezeigten Beispiel zwei, Hauptschneidkanten 5 und mehrere, im gezeigten Beispiel zwei, Nebenschneidkanten 7 aufweist.

In den vergrößerten Detaildarstellungen von Figur 2b und Figur 2c wird die erfindungsgemäße Ausbildung der Nebenschneidkante 7 deutlich. Auch hier unterscheiden sich Figur 2b und 2c im wesentlichen dadurch, daß die Schneidenecke einmal mit einem Krümmungsradius R_{∈} und einmal mit einer Fase versehen ist, die gegenüber der Senkrechten auf der Rotationsachse um 45° geneigt ist. An die Schneidecke 6 in Richtung der Rotationsachse 10 ist ein gekrümmter Abschnitt der Nebenschneidkante vorgesehen, mit dem großen Krümmungsradius r_{Wiper}. Der Mittelpunkt M, von dem sich der Krümmungsradius r_{Wiper} bemißt, ist nicht auf der Rotationsachse 10 angeordnet, sondern um den Wert d_{Offset} von dieser beabstandet. Der Wert d_{Offset} beträgt hier mehr als ein Drittel des Stirnradius D_{C}. Der Radius r_{Wiper} ist größer als der halbe Stirnradius, während beispielsweise der Krümmungsradius der Schneidenecke deutlich kleiner als der halbe Stirnradius ist.

Insbesondere in den Figuren 2b und 2c ist zu erkennen, daß nun der tiefste Bereich der Nebenschneidkante nicht mehr im Bereich der Schneidenecke 6 liegt, sondern in dem mit dem Radius r_{Wiper} gekrümmten Bereich. Dies hat zur Folge, daß die bogenförmigen Bearbeitungsspuren, die üblicherweise beim Stirnfräsen auftreten, nicht erzeugt werden. Deutlich zu erkennen ist in den Figuren 2b und 2c im Vergleich mit den Figuren 1b und 1c auch, daß der Freiwinkel 8, das heißt die Neigung der Nebenschneidkante 7 gegenüber der Senkrechten auf der Rotationsachse 10, deutlich größer ausgeführt werden kann.

Durch den erfindungsgemäßen Schaftfräser für das Stirnfräsen kann die Vorschubgeschwindigkeit gegenüber bekannten Stirnfräsern erhöht werden, ohne daß die Qualität der zu bearbeitenden Oberfläche leidet.

## Patentansprüche

1. Schaftfräser mit einem Schaftteil (2), das für die Befestigung des Schaftfräsers (1) an einer Fräsmaschine vorgesehen ist, und einem Schneidteil (3), das dafür vorgesehen ist, mit dem Werkstück in Eingriff zu treten, wobei die einhüllende Fläche des Schneidteils im wesentlichen zylindrisch ist, mit mindestens einer an der Umfangsfläche des Schneidteils angeordneten Hauptschneidkante (5) und mindestens einer an der Stirnfläche des Schneidteils angeordneten Nebenschneidkante (7), und mit einem Stirndurchmesser D_{c}, wobei die Nebenschneidkante (7) in der Projektion auf eine die Fräserachse enthaltende Ebene einen konvex gekrümmten Abschnitt hat mit einem Krümmungsradius r_{wiper} > D_{c/2} und einem Krümmungsmittelpunkt M im Abstand d_{Offset} < D_{c}/2 von der Fräserachse, **dadurch gekennzeichnet dass** der Mittelpunkt (M) des gedachten Kreises, auf dem der mit dem Radius r_{wiper} gekrümmte Abschnitt der Nebenschneldkante (7) liegt, außerhalb der Rotationsachse (10) des Fräsers liegt (d_{Offset} > 0).

2. Schaftfräser nach Anspruch 1, **dadurch gekennzeichnet, daß** r_{wiper}> 0,66 D_{c} ist.

3. Schaftfräser nach Anspruch 2, **dadurch gekennzeichnet, daß** r_{wiper} kleiner als 800 mm ist.

4. Schaftfräser nach einem der Ansprüche 1 bis 3, **dadurch gekennzeichnet, daß** der Abstand d_{Offset} zwischen dem Mittelpunkt M und der Rotationsachse (10) größer oder gleich D_{c}/6, vorzugsweise größer als D_{c}/4, besonders bevorzugt größer als D_{c}/3 ist.

5. Schaftfräser nach einem der Ansprüche 1 bis 4, **dadurch gekennzeichnet, daß** eine Schneidecke (6), die durch den Übergang von der Hauptschneidkante (5) zu der Nebenschneidkante (7) gebildet wird, einen Eckenradius r_{ε} aufweist, der kleiner als D_{c}/2 ist.

6. Schaftfräser nach einem der Ansprüche 1 bis 4, **dadurch gekennzeichnet, daß** eine Schneidecke (6), die von dem Übergang zwischen Hauptschneidkante (5) und Nebenschneidkante (7) gebildet wird, eine Fase aufweist, deren Fasenfläche vorzugsweise gegenüber der Ebene, die senkrecht zur Rotationsachse (10) verläuft um einen Winkel zwischen 30° und 60° und besonders bevorzugt zwischen 40° und 50° geneigt ist.

7. Schaftfräser nach einem der Ansprüche 1 bis 6, **dadurch gekennzeichnet, daß** die Nebenschneidkante (7) unter einem Freiwinkel (8) von mindestens 1° angeordnet ist.

8. Schaftfräser nach Anspruch 7, **dadurch gekennzeichnet, daß** der Freiwinkel (8) zwischen 1,5° und 10°, vorzugsweise zwischen 2,5° und 10° beträgt.

9. Schaftfräser nach einem der Ansprüche 1 bis 8, **dadurch gekennzeichnet, daß** das Schneidteil (3) zumindest teilweise aus Hartmetall besteht.

10. Schaftfräser nach einem der Ansprüche 1 bis 8, **dadurch gekennzeichnet, daß** das Schneidteil zumindest teilweise aus Cermet, PCD, CBN oder SiN besteht.

11. Schaftfräser nach einem der Ansprüche 1 bis 10, **dadurch gekennzeichnet, daß** der Schaftfräser ein Stirnfräser ist.

## Claims

1. A shank milling cutter comprising a shank portion (2) which is intended for fixing the shank milling cutter (1) to a milling machine and a cutting portion (3) which is intended to come into engagement with the workpiece, wherein the envelope surface of the cutting portion is substantially cylindrical, at least one major cutting edge (5) arranged at the peripheral surface of the cutting portion and at least one minor cutting edge (7) arranged at the end face of the cutting portion and with an end diameter D_{c}, wherein the minor cutting edge (7) in projection on to a plane containing the milling cutter axis has a convexly curved portion with a radius of curvature r_{wiper} > D_{c}/2 and a centre of curvature M at a spacing d_{Offset} < D_{c}/2 from the milling cutter axis, **characterised in that** the centre (M) of the notional circle on which the portion, curved with the radius r_{wiper}, of the minor cutting edge (7) is disposed, is outside the axis of rotation (10) of the milling cutter (d_{Offset} > 0).

2. A shank milling cutter according to claim 1 **characterised in that** r_{wiper} > 0.66 D_{c}.

3. A shank milling cutter according to claim 2 **characterised in that** r_{wiper} is less than 800 mm.

4. A shank milling cutter according to one of claims 1 to 3 **characterised in that** the spacing d_{Offset} between the centre M and the axis of rotation (10) is greater than or equal to D_{c}/6, preferably greater than D_{c}/4, particularly preferably greater than D_{c}/3.

5. A shank milling cutter according to one of claims 1 to 4 **characterised in that** a cutting edge corner (6) which is formed by the transition from the major cutting edge (5) to the minor cutting edge (7) has a corner radius r_{ε} which is less than D_{c}/2.

6. A shank milling cutter according to one of claims 1 to 4 **characterised in that** a cutting edge corner (6) which is formed by the transition between the major cutting edge (5) and the minor cutting edge (7) has a bevel whose bevel surface is preferably inclined with respect to the plane which is perpendicular to the axis of rotation (10) through an angle of between 30° and 60° and particularly preferably between 40° and 50°.

7. A shank milling cutter according to one of claims 1 to 6 **characterised in that** the minor cutting edge (7) is arranged at a clearance angle (8) of at least 1 °.

8. A shank milling cutter according to claim 7 **characterised in that** the clearance angle (8) is between 1.5° and 10°, preferably between 2.5° and 10°.

9. A shank milling cutter according to one of claims 1 to 8 **characterised in that** the cutting portion (3) at least partially comprises hard metal.

10. A shank milling cutter according to one of claims 1 to 8 **characterised in that** the cutting portion (3) at least partially comprises cermet, PCD, CBN or SiN.

11. A shank milling cutter according to one of claims 1 to 10 **characterised in that** the shank milling cutter is an end milling cutter.

## Revendications

1. Fraise à queue comportant une partie formant queue (2), qui est destinée à la fixation de la fraise à queue (1) à une fraiseuse, une partie coupante (3) qui est destinée à venir en engagement avec la pièce, la surface d'enveloppe de la partie coupante étant sensiblement cylindrique, au moins une arête de coupe principale (5) disposée au niveau de la face périphérique de la partie coupante et au moins une arête de coupe secondaire (7) disposée au niveau de la face frontale de la partie coupante, et ayant un diamètre frontal D_{c}, l'arête de coupe secondaire (7) présentant une portion incurvée convexe en projection dans un plan contenant l'axe de la fraise, un rayon de courbure r_{wiper} > D_{c}/2 et un centre de courbure M à une distance d_{offset} < D_{c}/2 de l'axe de la fraise, **caractérisée en ce que** le centre (M) du cercle imaginaire, sur lequel se trouve la portion de l'arête de coupe secondaire qui est incurvée avec le rayon r_{wiper}, est situé à l'extérieur de l'axe de rotation (10) de la fraise (d_{offset} > 0).

2. Fraise à queue selon la revendication 1, **caractérisée en ce que** r_{wiper} > 0,66 D_{c}.

3. Fraise à queue selon la revendication 2, **caractérisée en ce que** r_{wiper} est inférieur à 800 mm.

4. Fraise à queue selon l'une des revendications 1 à 3, **caractérisée en ce que** la distance d_{offset} entre le centre M et l'axe de rotation (10) est supérieure ou égale à D_{c}/6, avantageusement supérieure à DJ4, et de façon particulièrement préférée supérieure à D_{c}/3.

5. Fraise à queue selon l'une des revendications 1 à 4, **caractérisée en ce qu'**un bec de coupe (6), qui est formé par la transition entre l'arête de coupe principale (5) et l'arête de coupe secondaire (7), a un rayon de bec qui est inférieur à D_{c}/2.

6. Fraise à queue selon l'une des revendications 1 à 4, **caractérisée en ce qu'**un bec de coupe (6), qui est formé par la transition entre l'arête de coupe principale (5) et l'arête de coupe secondaire (7), présente un biseau dont la surface de biseau est inclinée par rapport au plan, qui s'étend perpendiculairement à l'axe de rotation (10), d'un angle compris entre 30° et 60° et de façon particulièrement préférée entre 40° et 50°.

7. Fraise à queue selon l'une des revendications 1 à 6, **caractérisée en ce que** l'arête de coupe secondaire (7) est disposée avec un angle dépouille (8) d'au moins 1 °.

8. Fraise à queue selon la revendication 7, **caractérisée en ce que** l'angle de dépouille (8) est compris entre 1,5° et 10°, avantageusement entre 2,5° et 10°.

9. Fraise à queue selon l'une des revendications 1 à 8, **caractérisée en ce que** la partie coupante (3) est au moins partiellement en métal dur.

10. Fraise à queue selon l'une des revendications 1 à 8, **caractérisée en ce que** la partie coupante est au moins partiellement en cermet, PCD, CBN ou SiN.

11. Fraise à queue selon l'une des revendications 1 à 10, **caractérisée en ce que** la fraise à queue est une fraise en bout.
